# FASCICULE DE BREVET EUROPEEN

(11) **EP 2 321 540 B1**
(45) Date de publication et mention de la délivrance du brevet: **28.08.2013**
(21) Numéro de dépôt: 09741377.7
(22) Date de dépôt: 07.09.2009
(51) Int. Cl.: F16B 2/20

(54) **STRUCTURE SUPPORTANT UN GROUPE MOTO VENTILATEUR D'UN VEHICULE AUTOMOBILE ET DISPOSITIF DE FIXATION D'UN BOITIER DE RELAIS D'ALIMENTATION DUDIT GROUPE A LADITE STRUCTURE.**
KRAFTFAHRZEUGMOTORLÜFTERSYSTEM STÜTZENDEN DÜSE UND VORRICHTUNG ZUR BEFESTIGUNG EINES ENERGIEVERSORGUNGSRELAISGEHÄUSES DES MOTORLÜFTERSYSTEMS AN DER DÜSE.
STRUCTURE SUPORTING AN AUTOMOBILE MOTOR-FAN SYSTEM AND DEVICE FOR ATTACHING A POWER SUPPLY RELAY HOUSING OF SAID MOTOR-FAN SYSTEM ONTO SAID STRUCTURE.

(30) Priorité: 08.09.2008 FR 0804908
(43) Date de publication de la demande: 18.05.2011
(73) Titulaire: Renault s.a.s., 92100 Boulogne-Billancourt (FR)
(72) Inventeur: FLANDIN, Michaël, F-28410 Broue (FR); RAVOISIER, Sylvie, F-78780 Maurecourt (FR)
(86) Numéro de dépôt international: PCT/FR2009/051680
(87) Numéro de publication internationale: WO 2010/026353

(56) Documents cités:
- EP-A- 1 604 857
- WO-A-2005/115682
- AU-B2- 534 139
- DE-A1-102006 023 042
- GB-A- 729 844
- GB-A- 2 056 547
- JP-A- 2001 168 553

## Description

La présente invention concerne un dispositif de fixation d'un élément, notamment un boîtier de relais d'alimentation d'un groupe moto ventilateur, sur une structure, notamment une buse supportant un groupe moto ventilateur dans un compartiment moteur d'un véhicule automobile. L'invention porte également sur un procédé d'assemblage d'un tel élément sur une telle structure. L'invention porte encore sur une structure apte à recevoir le dispositif de fixation.

Lors de la conception d'un véhicule automobile, il est courant de redéfinir la position d'un élément dans ce véhicule pour diverses raisons. Dans la situation ayant amené à la présente invention, il avait été demandé à des concepteurs d'un véhicule de déplacer un boîtier de relais d'alimentation d'un groupe moto ventilateur d'une position à proximité d'une batterie, d'un calculateur et d'un boîtier de fusibles du véhicule à une position à proximité du groupe moto ventilateur. Cependant, dans cette dernière position, il n'existe pas d'élément pouvant a priori supporter le poids du boîtier.

Les documents DE 10 2006 023042 A1, JP 2001 168553 A, EP 1 604 857 A, WO 2005/115682 A, GB 729 844 A, AU 534 139 B2 et GB 2 056 547 A, décrivent dans leur ensemble une structure de face avant d'un véhicule automobile pourvue de nervures aptes à coopérer par pincement avec un dispositif de fixation.

Le but de l'invention est donc de fournir un dispositif de fixation permettant le montage d'un élément sur un véhicule automobile. En particulier, l'invention propose un dispositif de fixation simple, bon marché et permettant un montage aisé, rapide et sans effort.

Le dispositif selon l'invention permet de fixer un élément sur une structure II est caractérisé en ce qu'il comprend au moins un premier moyen de fixation destiné à agir par pincement sur une première nervure de la structure et un deuxième moyen de fixation destiné à agir par pincement sur une deuxième nervure de la structure, le dispositif comprenant un moyen de positionnement mettant en position et/ou orientant l'un par rapport à l'autre les premier et deuxième moyens de fixation.

Le moyen de positionnement des premier et deuxième moyens l'un par rapport à l'autre peut être tel que les premier et deuxième moyens forment un angle aigu supérieur à 30° et, de préférence, supérieur à 45°.

Le moyen de positionnement des premier et deuxième moyens l'un par rapport à l'autre peut être tel que les premier et deuxième moyens forment au moins sensiblement un angle droit.

Le moyen de positionnement peut faire partie de l'élément.

Les premier et deuxième moyens de fixation peuvent être des agrafes.

L'élément peut être un boîtier de relais d'alimentation d'un groupe moto ventilateur de véhicule automobile.

Selon l'invention, une structure comprend des nervures aptes à coopérer avec un dispositif de fixation défini précédemment.

Les nervures peuvent comprendre des protubérances de détrompage.

La structure peut consister en une buse destinée à supporter un groupe moto-ventilateur de véhicule automobile.

Selon l'invention, un véhicule automobile comprend un dispositif défini précédemment.

Les dessins annexés représentent, à titre d'exemple, un mode de réalisation d'un dispositif selon l'invention.

La figure 1 est une vue de face depuis l'intérieur du compartiment moteur d'une face avant de véhicule automobile, cette face comprenant principalement un groupe moto ventilateur et une structure supportant ce groupe moto ventilateur.

La figure 2 est une vue de face d'une agrafe permettant la fixation d'un élément sur une structure selon un mode de réalisation du dispositif de fixation selon l'invention.

La figure 3 est une vue de côté de cette agrafe.

La figure 4 est une vue de dessus de cette agrafe.

La figure 5 est une vue en perspective de cette agrafe.

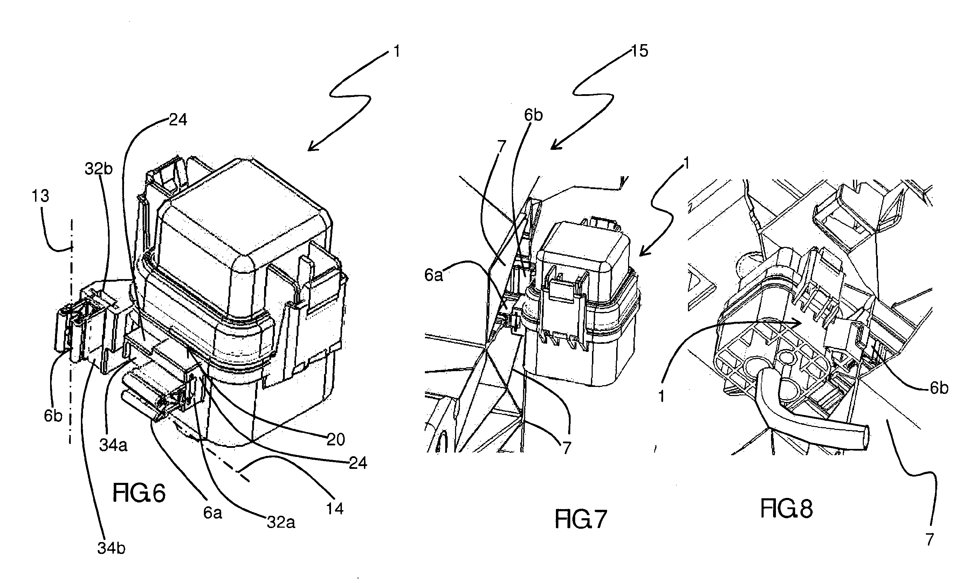

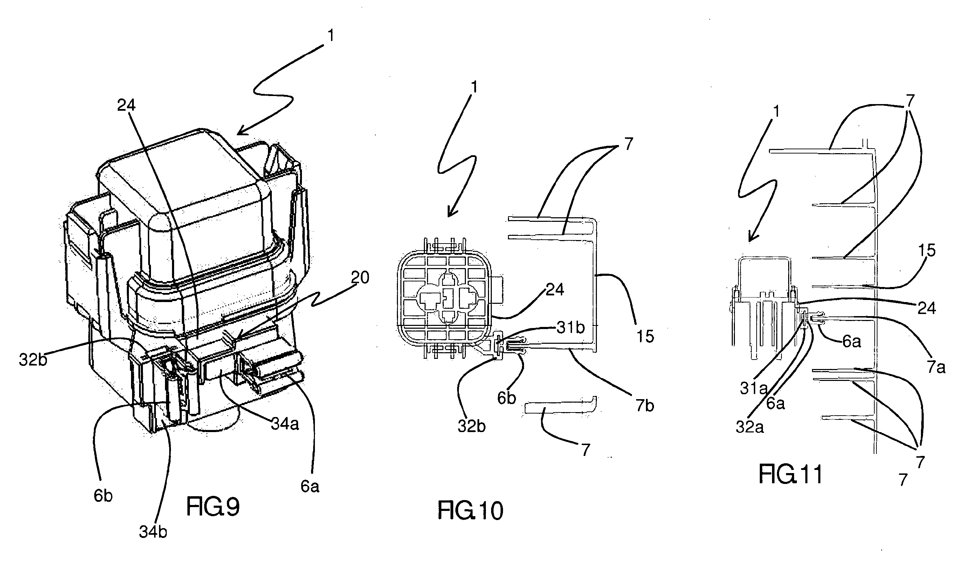

Les figures 6 et 9 sont des vues en perspective d'un élément destiné à être fixé sur une structure grâce à un dispositif de fixation selon l'invention.

Les figures 7 et 8 sont des vues en perspective d'un élément fixé sur une structure grâce à un dispositif de fixation selon l'invention.

La figure 10 est une vue en coupe, au niveau d'un premier moyen de fixation, d'un élément fixé sur une structure.

La figure 11 est une vue en coupe, au niveau d'un deuxième moyen de fixation, d'un élément fixé sur une structure.

Les figures 12 et 13 sont des vues d'une structure apte à recevoir un dispositif de fixation selon l'invention.

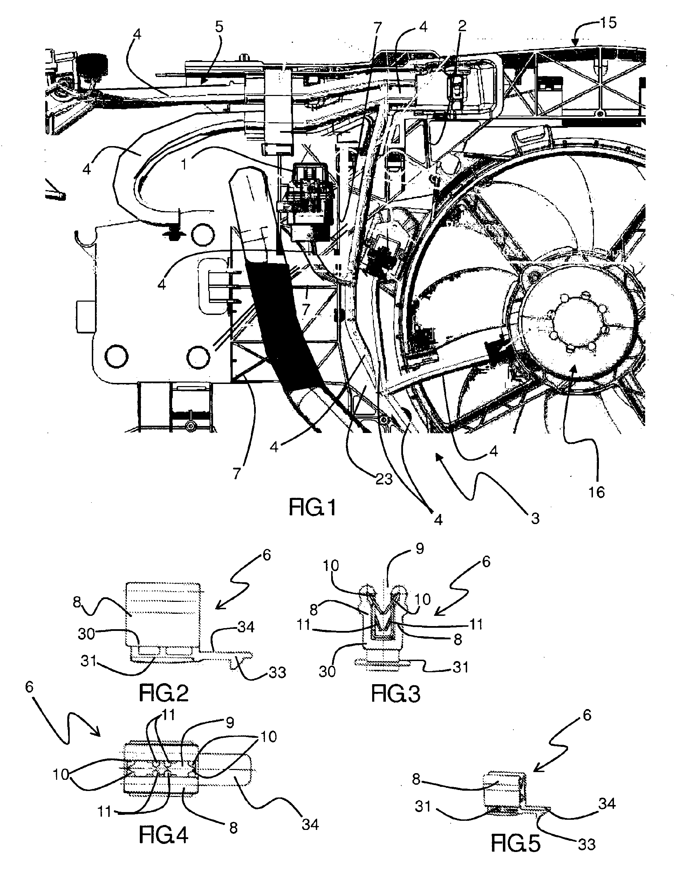

Une partie de face avant 3 de véhicule automobile est représentée à la figure 1. On y distingue une structure 15 en forme de buse présentant une ouverture 23 dans laquelle est fixé, sur la structure, un groupe moto ventilateur 16. On y distingue également un faisceau électrique 5 composé de différentes gaines 4 et un boîtier 1 de relais d'alimentation du groupe moto ventilateur. Ce boîtier présente la particularité d'être fixé à la structure.

La fixation du boîtier 1 sur la structure 15 est assurée par un dispositif 20 de fixation comprenant un premier moyen de fixation 6a et un deuxième moyen de fixation 6b. Un moyen de positionnement 24 permet de mettre en position et/ou d'orienter l'un par rapport à l'autre les premier et deuxième moyens de fixation. On entend par « mettre en position et/ou d'orienter l'un par rapport à l'autre les premier et deuxième moyens de fixation » bloquer des degrés de liberté des premier et deuxième moyens de fixation. De préférence, tous les degrés de liberté du premier moyen de fixation sont bloqués par rapport au deuxième moyen de fixation et par rapport au moyen de positionnement, le moyen de positionnement supportant les premier et deuxième moyens de fixation. Dans ce cas, les premier et deuxième moyens de fixation sont solidaires du moyen de positionnement, c'est-à-dire rigidement fixés au moyen de positionnement. Le moyen de positionnement est rigide, c'est-à-dire que sous l'effet d'actions mécaniques, il va très peu se déformer contrairement à une gaine de passage d'un faisceau de fil électrique par exemple qui se déformera beaucoup, notamment sous des sollicitations de flexion.

De préférence, les premier et deuxième moyens de fixation agissent par pincement, c'est-à-dire qu'ils comprennent des organes pinçant des zones de pincement, par exemple des nervures 7a, 7b, de la structure à laquelle ils doivent se fixer. La fixation est ensuite assurée par des phénomènes de frottement et/ou d'arc-boutement au niveau des interfaces organes pinçant-zones de pincement.

Par exemple, les moyens de fixation peuvent consister en des agrafes 6, 6a, 6b comme représentées aux figures 2 à 5. Ces agrafes ont globalement la forme d'un profilé en U à deux ailes 8 s'étendant parallèlement et dont le creux 9, ménagé entre ces ailes, est destiné à recevoir une zone de pincement 21 a, 21 b de la structure. Un premier ensemble de lamelles élastiques 10 s'étendant en vis-à-vis depuis les ailes et un deuxième ensemble de lamelles élastiques 11 s'étendant en vis-à-vis depuis les ailes sont prévus dans le creux du U. Ce sont ces lamelles qui viennent en contact et qui exercent, par leur déformation, des actions mécaniques sur la zone de pincement de la structure. Ces actions mécaniques donnent ensuite lieu à des forces de frottement, voire des arcs-boutements, s'opposant au retrait de la zone de pincement du creux 9. Par contre, les lamelles formant un angle avec les ailes, la zone de pincement peut pénétrer dans le creux aisément. Ces agrafes sont par exemple du type métallo-plastique, avec un profil en U en plastique et des lamelles métalliques rapportées.

Les deux ailes sont reliées l'une à l'autre par une embase 30. Cette embase présente par exemple des moyens pour fixer l'agrafe au moyen de positionnement 24. Ces moyens comprennent par exemple un premier élément de glissière, comme un patin 31, 31 a, 31 b, destiné à coopérer avec un deuxième élément de glissière, comme un rail 32a, 32b de forme complémentaire à celle du patin, le deuxième élément de glissière étant prévu sur le moyen de positionnement. Ces moyens comprennent encore un moyen de verrouillage comme un ergot 33 prévu au bout d'une languette élastique 34, 34a, 34b et destiné à coopérer avec un trou dans le deuxième élément de glissière pour interdire le mouvement des deux éléments de glissière l'un par rapport à l'autre et donc leur démontage.

Les moyens de fixation peuvent être fixés, par toute autre liaison démontable ou non, au moyen de positionnement. Notamment, ils peuvent être sertis ou soudés. Dans l'exemple décrit précédemment, la liaison bloque tous les degrés de liberté des moyens de fixation. Cela n'est pas forcément nécessaire. Par exemple, le degré de liberté de rotation des moyens de fixation selon un axe perpendiculaire à leur embase peut être conservé. Dans ce cas, c'est la géométrie de la structure sur laquelle le dispositif de fixation est destiné à se fixer qui détermine l'orientation de chacun des moyens de fixation.

De préférence, les deux moyens de fixation, c'est-à-dire, dans le cas décrit, les deux droites 13, 14 parallèles aux embases 30 et s'étendant selon les axes longitudinaux des profils en U des agrafes, forment un angle aigu supérieur à **30**°, en particulier, supérieur à 45° et, de préférence, sensiblement égal à 90°.

Le moyen de positionnement est destiné à être rapporté sur l'élément à fixer. Il peut y être rapporté par tout moyen. Il peut être aussi venu de l'élément, notamment lorsque l'élément est ou comprend un boîtier.

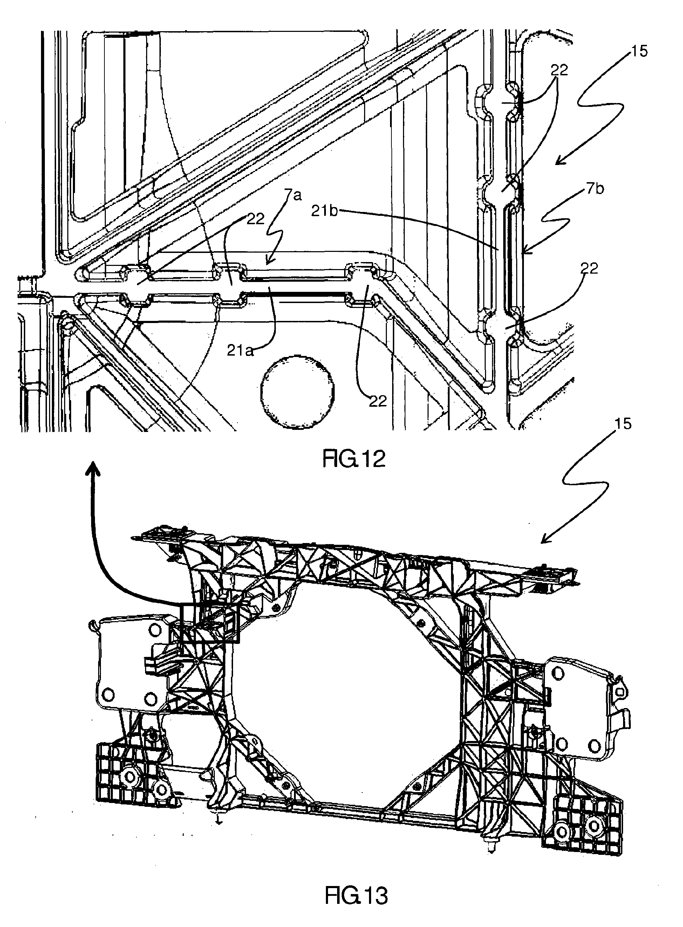

La structure sur laquelle doit être fixé l'élément est représentée aux figures 12 et 13. Cette structure comprend des nervures 7, dont une nervure 7a et une nervure 7b, que les moyens de fixation 6a et 6b doivent respectivement pincer. Pour délimiter, les zones de pincement 21 a et 21 b où les moyens de fixation doivent venir se positionner, il est prévu différentes protubérances 22 de détrompage interdisant tout montage de l'élément sur la structure dans une position non désirée.

Afin d'assurer une fixation aussi efficace que possible, il est recommande de prévoir une distance aussi élevée entre les deux moyens de fixation.

Selon l'invention, pour fixer un élément sur une structure, on procède comme suit :
- on fournit au moins deux moyens de fixation,
- on rapporte ces moyens de fixation sur un moyen de positionnement, celui-ci faisant éventuellement partie de l'élément,
- on déplace l'élément en translation par rapport à la structure de sorte à faire coopérer des nervures de la structure avec les moyens de fixation, en particulier de sorte à ce que des nervures pénètrent dans les moyens de fixation.

L'invention a été décrite ci-dessus appliquée à la fixation d'un boîtier de relais d'alimentation d'un groupe moto ventilateur sur une structure supportant un groupe moto ventilateur. Néanmoins, l'invention peut évidemment être appliquée à toute fixation d'un élément sur une structure. De même, le mode de réalisation décrit utilise deux moyens de fixation, mais il est possible qu'un dispositif de fixation selon l'invention utilise plus de deux moyens de fixation.

## Revendications

1. Structure de face avant d'un véhicule automobile consistant en une buse destinée à supporter un groupe (16) moto ventilateur du véhicule, **caractérisée en ce qu'**elle comprend un dispositif (20) de fixation d'un boîtier de relais (1) d'alimentation du groupe (16) moto ventilateur et **en ce qu'**elle comprend des nervures (7a, 7b) coopérant avec ledit dispositif (20) de fixation,
le dispositif (20) comprenant au moins un premier moyen (6a) de fixation destiné à agir par pincement sur une première nervure (7a) de la structure et un deuxième moyen (6b) de fixation destiné à agir par pincement sur une deuxième nervure (7b) de la structure, le dispositif (20) comprenant un moyen (24) de positionnement mettant en position et/ou orientant l'un par rapport à l'autre les premier (6a) et deuxième (6b) moyens de fixation, ces derniers étant des agrafes (6) ayant la forme d'un profilé en U à deux ailes (8) reliées l'une à l'autre par une embase (30) présentant des moyens pour fixer l'agrafe au moyen (24) de positionnement, ces moyens comprenant un premier et un deuxième élément de glissière ledit premier élément de glissière formant un patin (31, 31a, 31b) coopérant avec ledit deuxième élément de glissière formant un rail (32a, 32b) de forme complémentaire à celle du patin et comprenant encore un moyen de verrouillage formant un ergot (33) destiné à coopérer avec un trou dans le deuxième élément de glissière pour interdire le mouvement des deux éléments de glissière l'un par rapport à l'autre.

2. Structure selon la revendication 1 **caractérisée en ce que** le moyen de positionnement des premier et deuxième moyens l'un par rapport à l'autre est tel que les premier et deuxième moyens forment un angle aigu (α) supérieur à 30° et, de préférence, supérieur à 45°.

3. Structure selon la revendication 2, **caractérisée en ce que** le moyen de positionnement des premier et deuxième moyens l'un par rapport à l'autre est tel que les premier et deuxième moyens forment au moins sensiblement un angle droit.

4. Structure selon l'une quelconque des revendications précédentes, **caractérisé en ce que** le moyen de positionnement fait partie du boîtier de relais (1).

5. Structure selon l'une quelconque des revendications précédentes, **caractérisée en ce que** les nervures (7a, 7b) comprennent des protubérances (22) de détrompage.

## Patentansprüche

1. Frontendaufbau eines Kraftfahrzeugs, der aus einer Düse besteht, die dazu bestimmt ist, eine Motorventilatoreinheit (16) des Fahrzeugs zu tragen, **dadurch gekennzeichnet, dass** er eine Vorrichtung (20) zur Befestigung eines Relaisgehäuses (1) zur Versorgung der Motorventilatoreinheit (16) enthält, und dass er Rippen (7a, 7b) enthält, die mit der Befestigungsvorrichtung (20) zusammenwirken, wobei die Vorrichtung (20) mindestens eine erste Befestigungseinrichtung (6a), die dazu bestimmt ist, durch Klemmen auf eine erste Rippe (7a) des Aufbaus zu wirken, und eine zweite Befestigungseinrichtung (6b) enthält, die dazu bestimmt ist, durch Klemmen auf eine zweite Rippe (7b) des Aufbaus zu wirken, wobei die Vorrichtung (20) eine Positioniereinrichtung (24) enthält, die die erste (6a) und die zweite (6b) Befestigungseinrichtung positioniert und/oder zueinander ausrichtet, wobei letztere Klammern (6) in Form eines U-förmigen Profilteils mit zwei Schenkeln (8) sind, die durch einen Steg (30) miteinander verbunden sind, der Einrichtungen aufweist, um die Klammer an der Positioniereinrichtung (24) zu befestigen, wobei diese Einrichtungen ein erstes und ein zweites Gleitschienenelement enthalten, wobei das erste Gleitschienenelement ein Gleitstück (31, 31a, 31b) formt, das mit dem eine Schiene (32a, 32b) formenden zweiten Gleitschienenelement komplementärer Form zu derjenigen des Gleitstücks zusammenwirkt, und außerdem eine Verriegelungseinrichtung enthält, die einen Nocken (33) formt, der dazu bestimmt ist, mit einem Loch im zweiten Gleitschienenelement zusammenzuwirken, um die Bewegung der zwei Gleitschienenelemente zueinander zu verhindern.

2. Aufbau nach Anspruch 1, **dadurch gekennzeichnet, dass** die Positioniereinrichtung der ersten und zweiten Einrichtungen zueinander so ist, dass die erste und die zweite Einrichtung einen spitzen Winkel (α) von mehr als 30° und vorzugsweise von mehr als 45° bilden.

3. Aufbau nach Anspruch 2, **dadurch gekennzeichnet, dass** die Positioniereinrichtung der ersten und zweiten Einrichtungen zueinander so ist, dass die erste und die zweite Einrichtung mindestens im Wesentlichen einen rechten Winkel bilden.

4. Aufbau nach einem der vorhergehenden Ansprüche, **dadurch gekennzeichnet, dass** die Positioniereinrichtung Teil des Relaisgehäuses (1) ist.

5. Aufbau nach einem der vorhergehenden Ansprüche, **dadurch gekennzeichnet, dass** die Rippen (7a, 7b) Unverwechselbarkeitsvorsprünge (22) enthalten.

## Claims

1. Automobile vehicle front panel structure consisting of an air funnel adapted to support an electric fan (16) of the vehicle, **characterized in that** it includes a device (20) for fixing a relay box (1) for powering the electric fan (16) and **in that** it includes ribs (7a, 7b) cooperating with said fixing device (20), the device (20) including at least first fixing means (6a) adapted to be clamped onto a first rib (7a) of the structure and second fixing means (6b) adapted to be clamped onto a second rib (7b) of the structure, the device (20) including positioning means (24) for positioning and/or orienting the first and second fixing means (6a, 6b) relative to each other, the latter means consisting of clips (6) taking the form of a U-section with two flanges (8) joined together by a base (30) including means for fixing the clip to the positioning means (24), these means including first and second slide elements, said first slide element forming a skid (31, 31a, 31b) co-operating with said second slide element forming a rail (32a, 32b) of complementary shape to that of the skid and further including locking means forming a lug (33) adapted to co-operate with a hole in the second slide element to prevent movement of the two slide elements relative to each other.

2. Structure according to Claim 1, **characterized in that** the means for positioning the first and second means relative to each other are such that the first and second means form an acute angle (α) greater than 30° and preferably greater than 45°.

3. Structure according to Claim 2, **characterized in that** the means for positioning the first and second means relative to each other are such that the first and second means form at least substantially a right angle.

4. Structure according to any one of the preceding claims, **characterized in that** the positioning means are part of the relay box (1).

5. Structure according to any one of the preceding claims, **characterized in that** the ribs (7a, 7b) include polarizer protuberances (22).
